# FASCICULE DE BREVET EUROPEEN

(11) **EP 2 045 932 B1**
(45) Date de publication et mention de la délivrance du brevet: **14.07.2010**
(21) Numéro de dépôt: 08290926.8
(22) Date de dépôt: 02.10.2008
(51) Int. Cl.: H04B 7/26

(54) **Procédé de transmission de phonie et de données entre utilisateurs d'un réseau de télécommunications radio et dispositif mettant en oeuvre un tel procédé**
Verfahren zur Sprach- und Datenübertragung zwischen Benutzern eines Funk-Telekommunikationsnetzes, und Vorrichtung zur Umsetzung dieses Verfahrens
Method of transmitting voice and data between users of a wireless telecommunication network and device implementing such a method

(30) Priorité: 03.10.2007 FR 0706918
(43) Date de publication de la demande: 08.04.2009
(73) Titulaire: NEXTER Systems, 42328 Roanne Cedex (FR)
(72) Inventeur: Oresve, Bertand, 18023 Bourges Cedex (FR)
(74) Mandataire: Célanie, Christian

(56) Documents cités:
- EP-A- 1 207 637
- WO-A-99/31827
- US-B1- 6 711 144

## Description

Le domaine technique de l'invention est celui des procédés et dispositifs permettant la transmission simultanée de phonie et de données entre plusieurs utilisateurs au travers d'un réseau de télécommunications radio "half duplex".

Les réseaux de télécommunication radio "half duplex" sont utilisés notamment dans le domaine militaire. Ils ont pour caractéristique de mettre en oeuvre des protocoles de communication dans lesquels il y a une alternance des émissions et des réceptions. Un utilisateur du réseau peut ainsi occuper le canal de transmission pour émettre. Lorsqu'il a fini son émission il se positionne en situation d'attente d'une réponse et un autre utilisateur peut à son tour occuper le canal. La transmission se fait à chaque fois d'un utilisateur émetteur vers tous les autres utilisateurs qui sont récepteurs.

Le principal problème des dispositifs classiques est qu'ils ne peuvent émettre simultanément des données et de la phonie. Ce problème est d'autant plus gênant que les réseaux de télécommunications militaires ont une faible bande passante utile (inférieure à 64 kbit/s) en raison de la mise en oeuvre de cryptage des émissions et de technologies d'évasion de fréquence qui imposent une synchronisation précise sur un poste maître.

Pour résoudre ce problème, il a été proposé par EP1207637 de diviser le canal radio en alternant des créneaux temporels dédiés à la transmission de la phonie et des créneaux temporels dédiés à la transmission des données.

La phonie permet la communication vocale directe entre les différents utilisateurs. Un utilisateur donné qui prend la parole voit ainsi son message divisé entre les différents créneaux temporels successifs dédiés à la phonie. Lorsque son message est terminé, il libère la communication et les créneaux de phonie peuvent être occupés par un autre utilisateur.

La transmission de données vise par exemple les échanges de messages écrits ou la communication de fichiers de données, par exemple vidéo.

Lorsqu'un utilisateur souhaite envoyer des données il procède d'une façon analogue à la transmission de phonie. Il prend la ligne pour ce qui concerne les créneaux de données. Ces dernières se répartissent suivant les différents créneaux de données successifs. Lorsque la ligne est libérée, un autre utilisateur peut à son tour envoyer des données.

Même si ce procédé connu permet l'émission simultanée de phonie et de données il présente encore des inconvénients.

Il est en effet nécessaire d'assurer une synchronisation entre les différents utilisateurs, cela afin de pouvoir localiser temporellement les différents créneaux de phonie et de données. Pour assurer une telle synchronisation le procédé décrit par EP1207637 propose de mettre en oeuvre des créneaux spécifiquement dédiés aux informations de synchronisation. Ces créneaux dédiés occupent ainsi une partie de la bande passante disponible.

Le brevet EP1207637 mentionne également la possibilité d'utiliser les débuts de créneaux de phonie ou de données pour émettre un signal de synchronisation complémentaire. Cependant cette synchronisation ne se substitue pas à la synchronisation principale assurée par les créneaux spécifiques et elle occupe par ailleurs une partie de la largeur du créneau dédiée à la phonie ou aux données (quelques pour cents).

Un autre inconvénient du procédé proposé par EP1207637 est que l'alternance systématique de créneaux de phonie et de créneaux de données de largeur fixe conduit à la perte d'environ 50% de la bande passante disponible lorsqu'il n'y a pas de communication en phonie.

Enfin avec ce procédé tous les créneaux disponibles pour les données peuvent se trouver monopolisés pendant un temps plus ou moins long par une seule transmission. Il n'est pas possible avec ce procédé d'assurer la communication systématique et régulière par tous les utilisateurs d'informations essentielles sur un théâtre d'opérations, telles que par exemple des données de localisation.

La seule possibilité est d'émettre un signal d'une façon prioritaire, donc de couper la transmission de données en cours. Cependant une telle opération est généralement réservée à la transmission par le chef du réseau (poste maître) d'un ordre particulier.

C'est le but de l'invention que de proposer un procédé de transmission permettant de résoudre ces différents problèmes.

L'invention permet de faciliter la transmission par chaque utilisateur de ses données tout en réduisant les délais de transmission. En effet chaque utilisateur a grâce à l'invention un créneau de données qui lui est propre.

L'invention permet aussi d'assurer la synchronisation des différents utilisateurs d'une façon simple et ne pénalisant pas la bande passante du réseau.

Suivant différentes variantes de l'invention il devient possible d'optimiser la bande passante disponible en occupant une partie des créneaux de phonie pour la transmission de données.

Il est alors possible pour chaque utilisateur d'accroître sa propre bande passante en empiétant sur le créneau de voix disponible,

Ainsi, l'invention a pour objet un procédé de transmission de phonie et de données entre plusieurs utilisateurs au travers d'un réseau de télécommunications radio, procédé dans lequel on multiplexe temporellement la phonie et les données sous la forme d'une trame alternant des créneaux temporels dédiés à la transmission de la phonie et des créneaux temporels dédiés à la transmission des données, procédé caractérisé en ce qu'on attribue à chaque utilisateur du réseau ses propres créneaux de données dédiés, chaque créneau de donnée étant suivi d'un créneau de phonie utilisable par tous.

Plus particulièrement, on initialisera le procédé en affectant à chaque utilisateur d'un réseau un identifiant numérique spécifique, ce dernier permettant à l'utilisateur de localiser ses créneaux de données et d'y accéder.

Avantageusement, on assurera pour chaque utilisateur une synchronisation temporelle des émissions à partir de la détection du front montant ou descendant d'un créneau reçu d'un autre utilisateur

Selon un mode particulier de réalisation, chaque utilisateur peut, s'il n'y a pas de transmission de phonie en cours, modifier la largeur de son créneau de transmission de données pour occuper une partie du créneau de phonie précédent.

Selon un autre mode de réalisation, chaque utilisateur peut, s'il occupe lui même un créneau de phonie, modifier la largeur de son créneau de transmission de données qui suit immédiatement le créneau de phonie pour occuper une partie de l'espace inter créneaux.

Avantageusement, un utilisateur sera considéré comme utilisateur maître et possèdera un identifiant spécifique, la synchronisation des différents utilisateurs étant réalisée d'une façon préférentielle sur les créneaux des signaux émis par l'utilisateur maître.

Un utilisateur pourra par ailleurs se synchroniser sur n'importe quel autre utilisateur dont l'identifiant numérique est plus faible que le sien.

L'utilisateur maître pourra possèder l'identifiant numérique le plus faible du réseau.

D'une façon préférée, chaque utilisateur transmettra avec la phonie et/ou les données la liste des identifiants des utilisateurs du réseau avec lesquels il peut communiquer directement.

Chaque utilisateur pourra par ailleurs ainsi retransmettre automatiquement à un deuxième utilisateur avec lequel il peut communiquer une information qui lui a été transmise par un troisième utilisateur.

L'invention a également pour objet un dispositif de transmission de phonie et de données entre plusieurs utilisateurs au travers d'un réseau de télécommunications radio, dispositif mettant en oeuvre un tel procédé.

Ce dispositif comprend au moins un poste de radio au niveau de chaque utilisateur ainsi qu'une interface de communication par phonie et un terminal de traitement de données, il est caractérisé en ce qu'il comporte un boîtier interface de multiplexage qui est interposé au niveau de chaque utilisateur entre le poste de radio d'une part et l'interface de communication et le terminal d'autre part, boîtier interface assurant un multiplexage temporel des données et de la phonie sous la forme d'une trame alternant des créneaux temporels dédiés à la transmission de la phonie et des créneaux temporels dédiés à la transmission des données, multiplexage assurant à chaque utilisateur du réseau ses propres créneaux de données dédiés.

Avantageusement, le boîtier interface comportera une mémoire permettant de stocker la liste des utilisateurs du réseau ainsi que les informations relatives à leur intervisibilité.

Le boîtier interface pourra comporter des moyens lui permettant de retransmettre un message d'un utilisateur vers un autre utilisateur.

L'invention sera mieux comprise à la lecture de la description qui va suivre d'un mode particulier de réalisation, description faite en référence aux dessins annexés et dans lesquels :
- la figure 1 schématise un dispositif de communication mettant en oeuvre le procédé selon l'invention,
- la figure 2 montre une trame d'un signal multiplexé temporellement selon l'art antérieur,
- la figure 3 montre une trame d'un signal multiplexé temporellement conformément au procédé selon l'invention,
- la figure 4 schématise les échanges entre un émetteur et un récepteur suivant le procédé selon l'invention,
- la figure 5 schématise les signaux transmis par un utilisateur suivant un autre mode de réalisation de l'invention,
- la figure 6 schématise les signaux transmis par un utilisateur suivant un autre mode de réalisation de l'invention,
- la figure 7 montre la trame du signal multiplexé temporellement suivant une variante de mise en oeuvre.

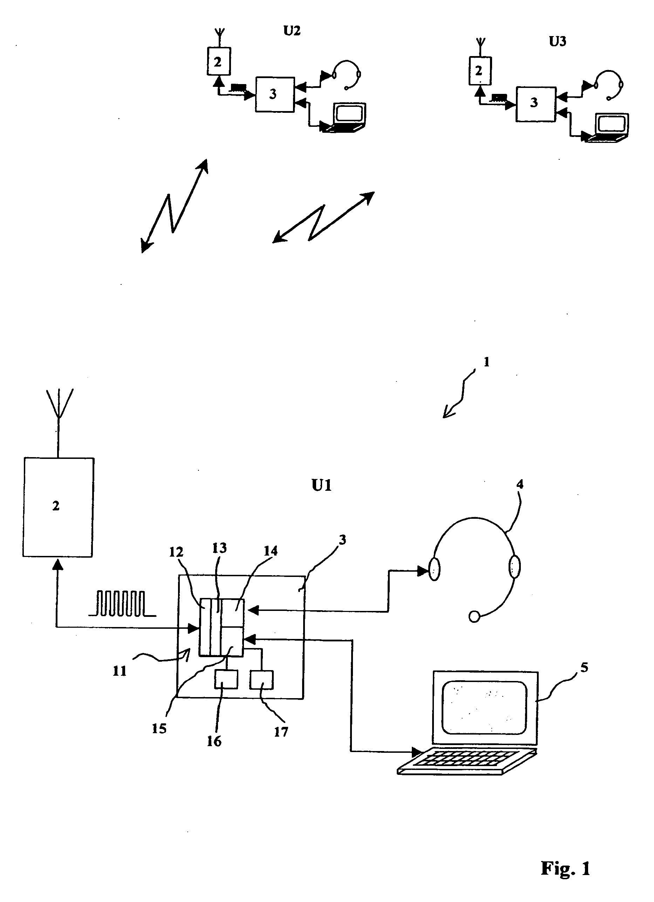

La figure 1 montre un réseau 1 de télécommunications radio entre trois utilisateurs U₁, U₂ et U₃ (le nombre d'utilisateurs n'est ici limité à trois qu'à titre d'exemple).

Chaque utilisateur est équipé d'un matériel analogue qui comprend un poste de radio 2 émetteur / récepteur, un interface de communication par phonie 4 et un terminal de traitement et de mise en forme de données 5, représenté ici sous la forme d'un micro ordinateur. L'interface de phonie 4 comprend d'une façon classique des écouteurs et un micro ainsi qu'un commutateur de demande de prise de ligne phonie (non représenté).

Le terminal 5 et l'interface 4 sont reliés au poste de radio 2 par l'intermédiaire d'un boîtier interface de multiplexage 3 qui assure différentes fonctions.

Ce boîtier 3 renferme un calculateur 11 comportant un module 12 assurant la modulation et la démodulation des signaux émis ou reçus. Un autre module 13 assure la gestion des échanges et incorpore un ou plusieurs algorithmes permettant la synchronisation des données et la gestion des créneaux attribués à l'utilisateur.

Un module 14 gère plus particulièrement les signaux en phonie et en particulier le codage des messages qui sont émis et le décodage des messages qui sont reçus.

Le codage permet de numériser puis de compacter l'information phonie de façon à réduire sa bande passante. Les différents codages utilisables sont bien connus de l'Homme du Métier. On pourra par exemple utiliser le codage MELP.

Un autre module 15 gère les signaux de données émis et reçus. Il est couplé à des mémoires : une mémoire 16 stocke la liste des utilisateurs connectés et les informations relatives à leur intervisibilité radio avec les autres utilisateurs du réseau (cette fonctionnalité sera décrite plus précisément par la suite).

Une autre mémoire 17 assure un stockage temporaire de tous les messages reçus afin de permettre leur rediffusion éventuelle.

Bien entendu les modules mémoires 15, 16 pourraient être incorporés au terminal 5.

Le boîtier 3 assure principalement le multiplexage entre les informations à émettre : phonie (voix) et données fournies par le terminal 5. Il assure, de façon symétrique, le démultiplexage des données et de la voix reçues via le poste radio 2.

Une des difficultés rencontrées dans le cadre des échanges de données numériques par télécommunication radio multi-utilisateurs est le problème de la synchronisation des données.

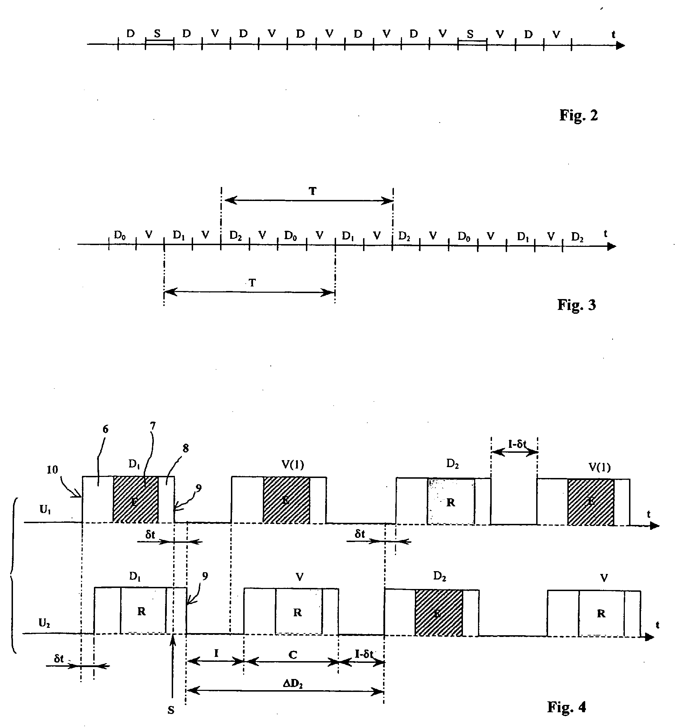

La figure 2 montre la trame d'un signal multiplexé selon le brevet EP1207637. On voit que sur une échelle temporelle (t) se succèdent d'une façon alternée des créneaux dédiés à la phonie (V) et des créneaux dédiés aux données D. Chaque créneau a une largeur de l'ordre de quelques dizaines de millisecondes.

La figure 3 montre la trame d'un signal multiplexé selon l'invention pour un réseau formé de trois utilisateurs.

Il y a là encore une alternance temporelle des créneaux dédiés à la transmission de la phonie (V) et des créneaux dédiés à la transmission des données (D). Cependant ici les créneaux relatifs aux données ne sont pas tous équivalents.

Il y a en effet l'apparition successive sur la trame, en alternance avec les créneaux de phonie V, de créneaux D₀, D₁ et D₂ qui sont respectivement associés à un utilisateur U₀, U₁ et U₂. Ainsi chaque utilisateur Uᵢ se voit attribuer une succession de créneaux de données Dᵢ qui lui sont dédiés et qui apparaissent avec une périodicité T qui dépend du nombre d'utilisateurs formant le réseau.

Concrètement, avec un débit de transmission de l'ordre de 2400 bits/s, ce qui est courant dans le domaine des transmissions militaires pour lesquelles il est mis en oeuvre des techniques d'évasion de fréquence et de cryptage, il est possible de former des réseaux comptant jusqu'à seize utilisateurs sans que le ralentissement de transmission des données ne soit sensible.

La définition du protocole selon l'invention fournit un avantage essentiel qui est de permettre à chaque utilisateur de transmettre systématiquement les données qui lui sont propres sans se trouver pénalisé par les transmissions d'un autre utilisateur qui pourraient occuper tous les créneaux de données.

Chaque utilisateur peut donc fournir régulièrement ses données de localisation aux autres utilisateurs ce qui est essentiel sur un théâtre d'opérations militaires car cette information permet de mettre à jour les systèmes d'informations terminaux de chaque utilisateur.

La transmission en phonie ne se trouve pas pour autant pénalisée puisque le nombre de créneaux de phonie n'est pas diminué. Il y a en effet toujours un créneau de phonie entre chaque créneau de données, créneau de phonie utilisable par tous (systématiquement en réception et accessible en émission après demande de prise de ligne).

Conformément à l'invention, il est nécessaire d'initialiser le réseau en affectant à chaque utilisateur potentiel un identifiant numérique spécifique.

Cette initialisation se fera à partir d'un poste maître qui affectera et transmettra un identifiant à chaque utilisateur raccordé au réseau. Les identifiants seront des nombres numériquement croissants. Le poste maître aura systématiquement l'identifiant au nombre le plus petit. On pourra par exemple affecter l'identifiant zéro au poste maître et numéroter les autres postes de façon croissante de 1 jusqu'à N.

Les créneaux de données se succèderont alors périodiquement toujours dans le même ordre :
0, 1, 2, ...N, 0, 1, 2, ...N...

L'identifiant joue le rôle d'une adresse réseau temporaire. Il est mis dans une mémoire du boîtier de multiplexage 3. Chaque message de données et de voix porte l'identifiant de son émetteur.

Ainsi chaque boîtier 3 est capable, lors du démultiplexage des signaux reçus, de repérer les créneaux de données transmis par les autres utilisateurs. Grâce à une synchronisation appropriée il peut donc localiser le créneau temporel qui lui est affecté pour pouvoir émettre ses propres données au bon moment.

Afin que chaque poste émetteur-récepteur puisse démultiplexer les données reçues ou insérer ses propres données dans la trame il est donc nécessaire que les signaux reçus/émis par chaque utilisateurs soient synchronisés. Suivant le procédé connu de EP1207637, il est possible de prévoir des créneaux spécifiques S qui sont dédiés à l'échange d'informations de synchronisation.

Préférentiellement et selon une autre caractéristique du procédé selon l'invention, on assurera la synchronisation temporelle des émissions à partir de la détection du front montant ou descendant d'un créneau reçu d'un autre utilisateur.

La figure 4 montre ainsi au niveau de la ligne supérieure les signaux émis par un utilisateur U₁. La trame émise comprend un créneau de données D₁ suivi par un créneau de phonie V(1).

On n'a représenté ici que quatre créneaux successifs. Il y a bien entendu de nombreux autres créneaux dans la trame jusqu'à la fin de l'émission. Le premier créneau est cependant celui correspondant à l'ouverture de la communication. Cette figure permet de mettre en évidence la synchronisation entre les utilisateurs. On a repéré par E les émissions et par R les réceptions. Les canaux de phonie sont ici occupés par l'utilisateur U₁.

Chaque créneau comprend plusieurs partiels : la partie initiale 6 correspond à l'émission de la porteuse du signal, sa durée est de l'ordre de 120 millisecondes.

La partie médiane 7 a une durée fixe de l'ordre de 200 millisecondes. Elle correspond à l'émission effective de données ou de phonie sur le créneau considéré. La partie finale 8 du créneau a enfin une largeur fixe de l'ordre de 220 millisecondes.

Sur la figure 4, la ligne inférieure montre le signal reçu au niveau d'un autre utilisateur U₂. L'électronique interne du boîtier 3 de cet utilisateur détecte le front montant 10 du créneau D₁ reçu et elle se place en état de réception. L'intervalle δt a une largeur comprise entre 80 et 120 millisecondes. C'est l'intervalle temporel nécessaire pour que l'électronique de U₂ soit réceptrice. La partie 7 du créneau de données est ensuite reçue et restituée à l'utilisateur U₂.

L'électronique du boîtier 3 de l'utilisateur U₂ détecte enfin le front descendant 9 du premier créneau de données D₁. C'est cette détection qui permet d'une façon préférée d'assurer la synchronisation (S) des signaux entre U₁ et U₂ (il en est bien entendu de même pour les autres utilisateurs recevant le signal émis par U₁).

On notera que tous les créneaux émis par l'utilisateur U₁ sont vus par l'utilisateur U₂ décalés de l'intervalle δt par rapport aux créneaux émis par l'utilisateur U₁. Cela ne pose pas de problème pour assurer la synchronisation, le boîtier 3 de chaque utilisateur maîtrisant la valeur de la durée de l'intervalle δt qui est mesurée à la détection du front descendant 9. La valeur moyenne de δt peut ainsi être calculée sur la base de plusieurs créneaux successifs.

Inversement, on remarquera sur la figure 4 que le même intervalle de temps δt sépare le front montant du créneau D₂ émis par U₂ de sa détection par l'utilisateur U₁.

On notera par ailleurs que, d'une façon classique, les inter créneaux I sont plus courts (au niveau d'un utilisateur donné) lorsqu'ils se situent entre un créneau dédié à la réception et un créneau dédié à l'émission.

Si on note I la valeur de l'inter créneau moyen prévu pour un utilisateur entre deux créneaux d'émission ou deux créneaux de réception (par exemple pour U₂ entre son créneau de réception de D₁ et son créneau de réception V), l'inter créneau pour l'utilisateur U₂ qui sépare la réception de phonie (V) et l'émission de données D₂ est égal à I-δt.

De même l'inter créneau séparant pour U₁ son créneau de réception de données D₂ de son créneau d'émission de phonie V(1) et égal à I-δt.

Une fois l'électronique de U₂ synchronisée sur celle de U₁, le boîtier 3 de multiplexage de U₂ est capable de localiser temporellement les créneaux successifs et notamment le créneau D₂ qui lui est attribué pour l'émission de ses propres données. En effet les intervalles temporels (I) séparant les différents créneaux et la durée (C) de chaque créneau sont des données connues et mises en mémoire au niveau de chaque boîtier 3 et l'intervale δt est évalué lors de la communication.

Par ailleurs l'identifiant de U₁ est attaché aux informations de données D₁ émises.

L'utilisateur U₂ sait donc que le créneau D₁ qu'il détecte est émis par U₁ et il peut donc par calcul localiser son propre créneau D₂ car l'ordre temporel des créneaux de données est fixé par programmation et les intervalles de temps (ΔD₂) séparant ces différents créneaux sont aussi calculables.

L'utilisateur U₂ reçoit les données émises par U₁ au cours du créneau D₁. Il stockera ces informations en mémoire pour exploitation au niveau de son terminal de traitement et de mise en forme de données 5.

On notera que la présentation qui est faite ici de la communication entre deux utilisateurs U₁ et U₂ est transposable au traitement des informations émises par U₁ et reçues par un utilisateur U₀, U₃, UN. L'ordre des créneaux D₀, D₁, D_{N} étant fixe, chaque utilisateur sait en effet localiser ses propres créneaux de données par rapport à ceux reçus d'un autre utilisateur dont il connaît l'identifiant.

A titre d'exemple, (voir la figure 4), après une émission de données D₁ reçue de U₁, l'utilisateur U₂ sait que son créneau de données D₂ se trouve à l'issue d'un intervalle de temps ΔD₂= 2I+1C-δt après le front descendant 9 de son créneau D₁ reçu (compte tenu de la largeur plus réduite pour l'inter créneau séparant une réception et une émission).

L'utilisateur U₃ pour sa part déduirait de la réception de données par U₁ que son propre créneau de données D₃ se trouve à l'issue d'un intervalle de temps ΔD₃= 4I+3C-δt.

Cette synchronisation pourra bien entendu se répéter plusieurs fois au cours d'une même transaction entre utilisateurs. En effet chaque créneau de données est affecté d'une façon unique et il est émis avec l'identifiant de l'émetteur, ce qui permet à un utilisateur de pouvoir se repositionner à tout moment dans une trame de données.

A titre de variante, il serait possible d'assurer la synchronisation temporelle des émissions à partir de la détection du front montant 10 d'un créneau. La valeur de δt variant dans le temps entre une valeure minimale et une valeur maximale connues, la synchronisation précise est maîtrisée au fil des créneaux reçus par le calcul d'une moyenne des mesures successives des intervalles δt.

Avantageusement, lorsque l'émission reçue provient de l'utilisateur maître (U₀) qui est détecté par son identifiant spécifique, on re-synchronisera tous les utilisateurs présents sur le réseau sur la base des créneaux émis par l'utilisateur maître.

Selon une variante de réalisation de l'invention, chaque utilisateur transmet avec ses données la liste des identifiants des utilisateurs du réseau avec lesquels il peut communiquer directement.

Une telle disposition permet à chaque utilisateur d'incrémenter au niveau de la mémoire 16 de son boîtier 3 une table des "intervisibilités radio" entre utilisateurs.

Il est en effet possible qu'un utilisateur Uᵢ ne puisse pas communiquer directement avec un utilisateur Uⱼ alors qu'il souhaite par ailleurs lui adresser des données. En effet les portées des postes émetteurs/récepteur 2 n'excèdent généralement pas quelques dizaines de kilomètres, un utilisateur donné peut donc tout à fait se trouver en intervisibilité radio avec deux utilisateurs qui ne peuvent pas communiquer.

Si un autre utilisateur Uₖ peut communiquer à la fois avec Uᵢ et avec Uⱼ il pourra servir de relais de communication.

Pour cela l'algorithme de communication incorporé dans le boîtier 3 mettra en évidence l'arrivée de données émises par Uᵢ à destination de Uⱼ alors que la table des intervisibilités constamment mise à jour à chaque réception lui montre que Uᵢ et Uⱼ ne peuvent communiquer.

Ce test simple commandera automatiquement l'envoi, en relais par Uₖ, de ce message reçu vers son destinataire final Uⱼ.

Afin d'éviter des envois multiples on pourra ajouter un test qui confiera la fonction de relais uniquement à l'utilisateur relais ayant l'identifiant numérique le plus faible.

Suivant un autre mode de réalisation de l'invention on pourra augmenter la bande passante de la transmission de données en autorisant un utilisateur qui occupe déjà les créneaux de phonie à conserver ce créneau lorsque le créneau de données suivant est le sien.

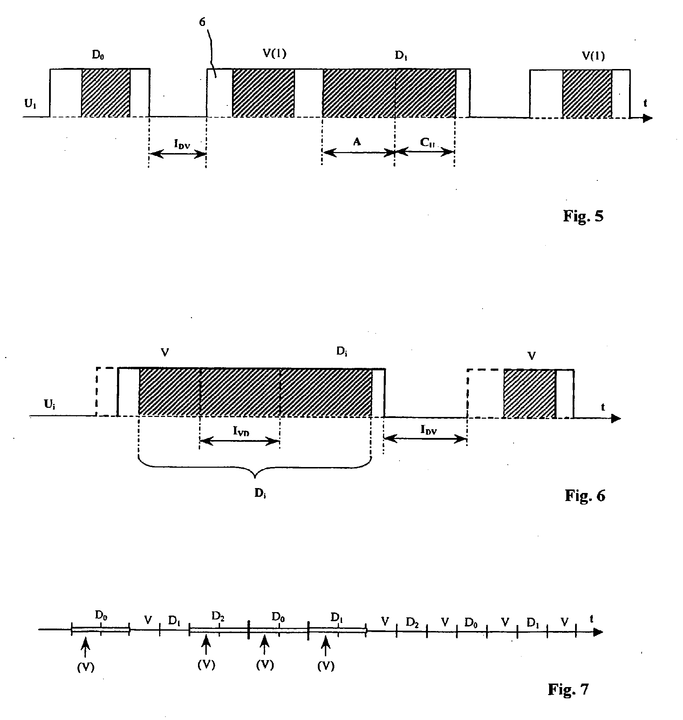

La figure 5 schématise ce type de fonctionnement. L'utilisateur U₁ occupe les créneaux de phonie V(1). Il souhaite émettre des données suivant ses créneaux D₁. Occupant déjà le réseau il va pouvoir conserver le créneau et rapprocher l'instant d'émission de ses données D₁ de la fin de la transmission de ses données de voix V(1). Il en résulte un élargissement A du temps utile pour émettre les données D₁ de près de 150%, élargissement qui se produit uniquement vers le créneau de phonie précédant, le front descendant du créneau de données D₁ ainsi élargi ne bouge pas temporellement.

On a représenté sur la figure 5 par Cᵤ la largeur utile normale du créneau de données D1 avant son élargissement. Le début de l'émission des données D₁ peut intervenir sensiblement dès la fin théorique du créneau dédié à la phonie.

Bien entendu, cet élargissement du créneau de données D₁ est sans incidence sur les autres créneaux de données D₂, D₃...D_{N} des autres utilisateurs qui peuvent continuer à transmettre leurs données.

Concrètement c'est le calculateur 11 qui assurera (avec un algorithme approprié) cette modification du protocole d'émission. Il est en effet capable de repérer une prise de ligne en phonie par l'utilisateur et de provoquer le rapprochement des créneaux Vi et Di à l'émission des données pour l'utilisateur concerné.

Suivant un autre mode de réalisation de l'invention on pourra augmenter la bande passante de la transmission de données en autorisant un utilisateur à utiliser pour l'envoi de données une partie du créneau de phonie qui précède son propre créneau de données si personne n'utilise les créneaux de voix.

La figure 6 schématise ce type de fonctionnement. L'utilisateur Uᵢ émet des données suivant les créneaux Dᵢ. Le calculateur 11 a repéré au cours des phases de transmission précédentes que les créneaux de phonie V sont libres (absence d'échanges en phonie). Ces créneaux de phonies disponibles sont figurés en pointillés.

Dans ce cas, l'algorithme de gestion des échanges du boîtier multiplexeur 3 va commander la prise de ligne pour les créneaux phonie et va utiliser le créneau (V) précédant le créneau Dᵢ (ainsi que l'inter créneau I_{VD} associé) pour transmettre ses données Dᵢ. Il en résulte un créneau dédié aux données très élargi (en trait fort sur la figure).

L'inter créneaux I_{VD} étant sensiblement égal à l'espace disponible pour transmettre les données, on peut ainsi pratiquement tripler la bande passante disponible pour un utilisateur donné.

Bien entendu, cette occupation du créneau phonie par Uᵢ est sans incidence sur les autres créneaux de données D₂, D₃...D_{N} des autres utilisateurs qui peuvent continuer à transmettre leurs propres données. Bien entendu si la voie dédiée à la phonie reste libre, un utilisateur Uᵢ qui occupe le créneau de phonie précédant son créneau de données Dᵢ pourra occuper tous les autres créneaux de phonie qui précèdent ses créneaux de données.

Bien entendu, dans tous les cas, une demande d'émission en phonie par un utilisateur interrompra l'occupation des créneaux de phonie par ces envois des données. Les données transiteront cependant toujours dans les créneaux qui leur sont dédiés compte tenu du protocole mis en oeuvre. Il n'y a donc jamais d'interruption du service mais une amélioration de la bande passante chaque fois que cela est rendu possible.

On notera qu'avec ce mode de réalisation, tous les utilisateurs peuvent élargir leur bande passante en occupant les créneaux de phonie qui précèdent leurs propres créneaux de données. La figure 7 montre ainsi à titre d'exemple une trame de signal dans laquelle les utilisateurs U₀, U₁ et U₂ occupent chacun à leur tour les créneaux de phonies disponibles devant leurs propres créneaux de données D₀,D₁,D₂.

## Revendications

1. Procédé de transmission de phonie et de données entre plusieurs utilisateurs (Uᵢ) au travers d'un réseau (1) de télécommunications radio, procédé dans lequel on multiplexe temporellement la phonie et les données sous la forme d'une trame alternant des créneaux temporels dédiés à la transmission de la phonie et des créneaux temporels dédiés à la transmission des données, procédé **caractérisé en ce qu'**on attribue à chaque utilisateur (Uᵢ) du réseau ses propres créneaux de données (Dᵢ) dédiés, chaque créneau de donnée étant suivi d'un créneau de phonie (V) utilisable par tous.

2. Procédé de transmission selon la revendication 1, **caractérisé en ce qu'**on initialise le procédé en affectant à chaque utilisateur (Uᵢ) d'un réseau un identifiant numérique spécifique, ce dernier permettant à l'utilisateur de localiser ses créneaux de données (Dᵢ) et d'y accéder.

3. Procédé de transmission selon une des revendications 1 ou 2, **caractérisé en ce qu'**on assure pour chaque utilisateur (Uᵢ) une synchronisation temporelle des émissions à partir de la détection du front montant (10) ou descendant (9) d'un créneau reçu d'un autre utilisateur.

4. Procédé de transmission selon une des revendications 2 ou 3, **caractérisé en ce que** chaque utilisateur (Uᵢ) peut, s'il n'y a pas de transmission de phonie en cours, modifier la largeur de son créneau de transmission de données (Dᵢ) pour occuper une partie du créneau de phonie précédent.

5. Procédé de transmission selon une des revendications 2 ou 3, **caractérisé en ce que** chaque utilisateur (Uᵢ) peut, s'il occupe lui même un créneau de phonie (V), modifier la largeur de son créneau de transmission de données (Dᵢ) qui suit immédiatement le créneau de phonie pour occuper une partie de l'espace inter créneaux (I_{VD}).

6. Procédé de transmission selon une des revendications 1 à 5, **caractérisé en ce qu'**un utilisateur (U₀) est considéré comme utilisateur maître et possède un identifiant spécifique, la synchronisation des différents utilisateurs (Uᵢ) étant réalisée d'une façon préférentielle sur les créneaux des signaux émis par l'utilisateur maître (U₀).

7. Procédé de transmission selon une des revendications 1 à 6, **caractérisé en ce qu'**un utilisateur (Uᵢ) peut se synchroniser sur n'importe quel autre utilisateur dont l'identifiant numérique est plus faible que le sien.

8. Procédé de transmission selon une des revendications 6 ou 7, **caractérisé en ce que** l'utilisateur maître (U₀) possède l'identifiant numérique le plus faible du réseau.

9. Procédé de transmission selon une des revendications 1 à 8, **caractérisé en ce que** chaque utilisateur (Uᵢ) transmet avec la phonie et/ou les données la liste des identifiants des utilisateurs du réseau avec lesquels il peut communiquer directement.

10. Procédé de transmission selon la revendication 9, **caractérisé en ce que** chaque utilisateur (Uᵢ) peut retransmettre automatiquement à un deuxième utilisateur avec lequel il peut communiquer une information qui lui a été transmise par un troisième utilisateur.

11. Dispositif de transmission de phonie et de données entre plusieurs utilisateurs (Uᵢ) au travers d'un réseau (1) de télécommunications radio, dispositif mettant en oeuvre le procédé selon une des revendications précédentes et comprenant au moins un poste de radio (2) au niveau de chaque utilisateur ainsi qu'une interface (4) de communication par phonie et un terminal (5) de traitement de données, dispositif **caractérisé en ce qu'**il comporte un boîtier (3) interface de multiplexage qui est interposé au niveau de chaque utilisateur entre le poste de radio (2) d'une part et l'interface de communication (4) et le terminal (5) d'autre part, boîtier interface (3) assurant un multiplexage temporel des données et de la phonie sous la forme d'une trame alternant des créneaux temporels dédiés à la transmission de la phonie et des créneaux temporels dédiés à la transmission des données, multiplexage assurant à chaque utilisateur (Uᵢ) du réseau ses propres créneaux de données (Dᵢ) dédiés.

12. Dispositif de transmission de phonie et de données selon la revendication 11, **caractérisé en ce que** le boîtier interface (3) comporte une mémoire permettant de stocker la liste des utilisateurs (Uᵢ) du réseau ainsi que les informations relatives à leur intervisibilité.

13. Dispositif de transmission de phonie et de données selon la revendication 12, **caractérisé en ce que** le boîtier interface (3) comporte des moyens lui permettant de retransmettre un message d'un utilisateur vers un autre utilisateur.

## Claims

1. Process of voice and data transmission between several users (Uᵢ) via a radio telecommunication network (1), process in which the voice and data are temporally multiplexed in the form of a frame alternating time slots dedicated to voice transmission and time slots dedicated to data transmission, process **characterized in that** each user (Uᵢ) of the network is attributed his own dedicated data time slots (Dᵢ), each data time slot being followed by a voice time slot (V) that can be used by all.

2. Transmission process according to Claim 1, **characterized in that** the process is initialized by giving a specific digital identifier to each user (Uᵢ), such identifier enabling the user to locate his data slots (Dᵢ) and access them.

3. Transmission process according to one of Claims 1 or 2, **characterized in that** the time synchronization of the transmissions is ensured for each user by detecting the leading (10) or trailing (9) pulse edge of a slot received from another user.

4. Transmission process according to one of Claims 2 or 3, **characterized in that** each user (Uᵢ) may, if there is no ongoing voice transmission, modify the width of his data transmission slot (Di) to occupy part of the preceding voice slot.

5. Transmission process according to one of Claims 2 or 3, **characterized in that** each user (Uᵢ) may, if he himself is occupying a voice slot (V), modify the width of his data transmission slot (Dᵢ) immediately following the voice slot so as to occupy part of the interval between the slots (I_{VD}).

6. Transmission process according to one of Claims 1 to 5, **characterized in that** one user (U₀) is considered to be the master user and has a specific identifier, the synchronization of the different users (Uᵢ) preferentially being made on the slots of the signals emitted by the master user (U₀).

7. Transmission process according to one of Claims 1 to 6, **characterized in that** a user (Uᵢ) can be synchronized with any other user whose digital identifier is lower than his.

8. Transmission process according to one of Claims 6 or 7, **characterized in that** the master user (U₀) has the lowest digital identifier in the network.

9. Transmission process according to one of Claims 1 to 8, **characterized in that** each user (Uᵢ) along with the voice or data also transmits the list of the network users with whom he can communicate directly.

10. Transmission process according to Claim 9, **characterized in that** each user (Uᵢ) can automatically retransmit to a second user with whom he is able to communicate information transmitted to him by a third user.

11. Voice and data transmission device between several users (Uᵢ) via a radio telecommunication network (1), device implementing the process according to one of the above Claims and comprising at least one radio set (2) for each user as well as a voice communication interface (4) and a data processing terminal (5), device **characterized in that** it incorporates a multiplexer interface box positioned for each user between the radio set (2) on the one hand and the communication interface (4) and the terminal (5) on the other, such interface box (3) ensuring the temporal multiplexing of the data and voice in the form of a frame alternating time slots dedicated to voice transmission and time slots dedicated to data transmission, such multiplexing ensuring for each user (Uᵢ) of the network his own dedicated data slots (Dᵢ).

12. Voice and data transmission device according to Claim 11, **characterized in that** the interface box (3) incorporates a memory enabling the list of network users (Uᵢ) as well as the information related to their intervisibility to be stored.

13. Voice and data transmission device according to Claim 12, **characterized in that** the interface box (3) incorporates means to enable it to retransmit a message from one user to another user.

## Patentansprüche

1. Verfahren zur Übertragung von Sprechfunk und von Daten zwischen mehreren Benutzern (Uᵢ) über ein Radionetzwerk (1), wobei in dem Verfahren der Sprechfunk und die Daten in der Form eines Datenblocks gemultiplext werden, indem temporäre Sendezeiten, die der Übertragung des Sprechfunks zugeordnet sind, und temporäre Sendezeiten, die der Übertragung der Daten zugeordnet sind, einander abwechseln, wobei das Verfahren **dadurch gekennzeichnet ist, *dass*** jedem Benutzer (Uᵢ) des Netzes seine eigenen Sendezeiten (Dᵢ) für zugeordnete Daten zugeteilt werden, wobei jede Datensendezeit von einer Sprechfunksendezeit (V), die von allen benutzt werden kann, gefolgt wird.

2. Übertragungsverfahren nach Anspruch 1, **dadurch gekennzeichnet, dass** das Verfahren initialisiert wird, indem jedem Benutzer (Uᵢ) eines Netzes eine spezifische numerische Kennzeichnung zugeordnet wird, wobei diese Letztere es dem Benutzer ermöglicht, seine Datensendezeit (Dᵢ) zu lokalisieren und darauf zuzugreifen.

3. Übertragungsverfahren nach einem der Ansprüche 1 oder 2, **dadurch gekennzeichnet, dass** für jeden Benutzer (Uᵢ) eine temporäre Synchronisierung der Sendung ausgehend von der Detektierung der ansteigenden (10) oder fallenden (9) Front einer empfangenen Sendezeit eines anderen Benutzers gewährleistet wird.

4. Übertragungsverfahren nach einem der Ansprüche 2 oder 3, **dadurch gekennzeichnet, dass** jeder Benutzer (Uᵢ) die Breite seiner Sendezeit zur Übertragung von Daten (Dᵢ) modifizieren kann, falls es keine laufende Sprechfunkübertragung gibt, um einen Teil der vorhergehenden Sprechfunksendezeit zu belegen.

5. Übertragungsverfahren nach einem der Ansprüche 2 oder 3, **dadurch gekennzeichnet, dass** jeder Benutzer (Uᵢ) die Breite seiner Sendezeit zur Übertragung von Daten (Dᵢ), die unmittelbar der Sprechfunksendezeit folgt, modifizieren kann, falls er selbst eine Sprechfunksendezeit (V) belegt, um einen Teil des Raums zwischen Sendezeiten (I_{VD}) zu belegen.

6. Übertragungsverfahren nach einem der Ansprüche 1 bis 5, **dadurch gekennzeichnet, dass** ein Benutzer (U₀) als Hauptbenutzer angesehen wird und eine spezifische Kennzeichnung besitzt, wobei die Synchronisierung der verschiedenen Benutzer (Uᵢ) in einer bevorzugten Weise über die Sendezeiten der vom Hauptbenutzer (U₀) ausgesendeten Signale ausgeführt wird.

7. Übertragungsverfahren nach einem der Ansprüche 1 bis 6, **dadurch gekennzeichnet, dass** sich ein Benutzer (Uᵢ) über jeden beliebigen Benutzer synchronisieren kann, dessen numerische Kennzeichnung geringer als die Seinige ist.

8. Übertragungsverfahren nach einem der Ansprüche 6 oder 7, **dadurch gekennzeichnet, dass** der Hauptbenutzer (U₀) die schwächste numerische Kennzeichnung des Netzes besitzt.

9. Übertragungsverfahren nach einem der Ansprüche 1 bis 8, **dadurch gekennzeichnet, dass** jeder Benutzer (Uᵢ) mit dem Sprechfunk und/oder den Daten die Liste der Kennzeichnungen der Benutzer des Netzes, mit denen er direkt kommunizieren kann, überträgt.

10. Übertragungsverfahren nach Anspruch 9, **dadurch gekennzeichnet, dass** jeder Benutzer (Uᵢ) automatisch einem zweiten Benutzer, mit dem er kommunizieren kann, eine Information, die ihm von einem dritten Benutzer übertragen worden ist, weiterleiten kann.

11. Vorrichtung zur Übertragung von Sprechfunk und von Daten zwischen mehreren Benutzern (Uᵢ) über ein Radionetzwerk (1), wobei die Vorrichtung das Verfahren nach einem der vorhergehenden Ansprüche einsetzt und wenigstens ein Radiogerät (2) im Bereich eines jeden Benutzers sowie eine Schnittstelle (4) zur Sprechfunkkommunikation und ein Terminal (5) zur Verarbeitung von Daten umfasst, wobei die Vorrichtung **dadurch g*****ekennzeichnet ist**, dass* sie ein Schnittstellengehäuse (3) zum Multiplexbetrieb umfasst, das im Bereich eines jeden Benutzers zwischen dem Radiogerät (2) einerseits und der Schnittstelle zur Kommunikation (4) und dem Terminal (5) andererseits eingefügt ist, wobei das Schnittstellengehäuse (3) einen temporären Multiplexbetrieb der Daten und des Sprechfunks in der Form eines Datenblocks gewährleistet, indem temporäre Sendezeiten, die der Übertragung des Sprechfunks zugeordnet sind, und temporäre Sendezeiten, die der Übertragung der Daten zugeordnet sind, einander abwechseln, wobei der Multiplexbetrieb jedem Benutzer (Uᵢ) des Netzes seine eigenen Sendezeiten von zugeordneten Daten (Dᵢ) gewährleistet.

12. Vorrichtung zur Übertragung von Sprechfunk und von Daten nach Anspruch 11, **dadurch gekennzeichnet, dass** das Schnittstellengehäuse (3) einen Speicher umfasst, der es ermöglicht, die Liste der Benutzer (Uᵢ) des Netzes sowie die Informationen bezüglich ihrer Sichtbarkeit untereinander zu speichern.

13. Vorrichtung zur Übertragung von Sprechfunk und von Daten nach Anspruch 12, **dadurch gekennzeichnet, dass** das Schnittstellengehäuse (3) Mittel umfasst, die es ihm ermöglichen, eine Mitteilung eines Benutzers zu einem anderen Benutzer weiterzuleiten.
